# EUROPÄISCHE PATENTSCHRIFT

(11) **EP 0 710 523 B1**
(45) Veröffentlichungstag und Bekanntmachung des Hinweises auf die Patenterteilung: **16.02.2000**
(21) Anmeldenummer: 94117431.0
(22) Anmeldetag: 04.11.1994
(51) Int. Cl.: B23Q 7/03, B21J 13/08, B21K 1/76

(54) **Verfahren und Vorrichtung zum Entgräten und Kalibrieren von in einem Umformaggregat geschmiedeten Werkstücken**
Method and apparatus for deburring and calibrating of forged workpieces
Procédé et appareil pour ébavurer et calibrer des pièces forgées

(43) Veröffentlichungstag der Anmeldung: 08.05.1996
(73) Patentinhaber: Brockhaus Söhne GmbH & Co. KG, D-58840 Plettenberg-Kückelheim (DE)
(72) Erfinder: Baberg, Günter, D-58840 Plettenberg (DE); Bachmann, Horst, D-96472 Rödental (DE)
(74) Vertreter: Kohlmann, Karl Friedrich, Dipl.-Ing.

(56) Entgegenhaltungen:
- DE-A- 2 002 987
- DE-A- 2 920 822
- GB-A- 1 157 944
- GB-A- 2 090 174
- US-A- 5 078 254
- VDI ZEITSCHRIFT, Bd.134, Nr.4, April 1992, DUSSELDORF DE Seiten 103 - 104 RAU 'Achsschenkel und Kurbelwellen automatisch geschmiedet'
- WERKSTATT UND BETRIEB, Bd.123, Nr.12, Dezember 1990, MUNCHEN DE Seiten 949 - 955 PISCHEL 'Stand und Entwicklungstendenzen beim Herstellen von Pleueln'

## Beschreibung

Die vorliegende Erfindung betrifft ein Verfahren und eine Vorrichtung zum Entgraten und Kalibrieren von in einem Umformaggregat geschmiedeten Werkstücken.

Verfahren und Vorrichtungen dieser Art sind bekannt. Das im Umformaggregat geschmiedete Werkstück wird dabei von einer ersten Bedienungsperson mittels einer Zange von Hand dem Umformaggregat entnommen, auf einem Übergabetisch abgelegt, von diesem von einer zweiten Bedienungsperson mittels einer Zange aufgenommen und dem Abgrataggregat zugeführt. Nach dem Abtrennen des Grates vom Werkstück wird das Werkstück von der zweiten Bedienungsperson erneut erfaßt und an das Kalibrieraggregat übergeben.

Ferner offenbart Dokument GB-A-1 157 944 ein Verfahren zum Entgraten von einem in einer Umformstation geschmiedeten Werkstück, mit den folgenden Schritten:

Fördern einer Transportaufnahme im Umlauf in einer endlosen Förderstrecke von einer Beladestation zu der Umformstation, von dort zu einer Abgratstation, von dieser zu einer Gratentnahmestation und von dort zurück zur Beladestation; Gießen eines Gußstücks in der Beladestation; Fördern des Gußstücks in der Transportaufnahme in die Umformstation; Schmieden des Gußstücks zu einem mit Grat versehenen Werkstück in der Umformstation; Fördern der Transportaufnahme mit dem Werkstück von der Umformstation in die Abgratstation; Trennen des Werkstücks vom Grat; Fördern des abgetrennten Grates in der Transportaufnahme aus der Abgratstation zur Gratentnahmestation; Abnehmen des Grates von der Transportaufnahme in der Gratentnahmestation und Rückführen der leeren Transportaufnahme zur Beladestation.

Dokument GB-A-1 157 944 offenbart weiter eine eine endlose Förderstrecke bildende Vorrichtung zum Fördern mindestens einer Transportaufnahme im Umlauf, Einrichtungen zum taktweisen Fortbewegen der Transportaufnahme bzw. Transportaufnahmen von einer Beladestation zu einer Umformstation, von dieser zu einer Abgratstation und von dort zu einer Gratentnahmestation und zurück zur Beladestation, sowie einer Greifeinrichtung, mit der der Grat in der Gratentnahmestation von der Transportaufnahme abhebbar ist.

Der Erfindung liegt die Aufgabe zugrunde, herkömmliche Verfahrensweisen zum Entgraten und Kalibrieren von in einem Umformaggregat geschmiedeten Werkstück zu automatisieren, und zwar in der Weise, daß die einzelnen Verfahrensschritte mit technisch einfachen Mitteln und auf betriebssichere Weise realisiert werden können.

Diese Aufgabe wird durch eine Verfahrensweise gelöst, die folgende Schritte aufweist:
- Fördern mindestens einer Transportaufnahme im Umlauf über einen eine endlose Förderstrecke bildenden Rinförderer von einer Beladestation zu einer Abgabestation, von dieser zu einer Gratentnahmestation und von dort zurück zur Beladestation;
- Auflegen jeweils mindestens eines, im Umformaggregat geschmiedeten, mit Grat versehenen Werkstückes auf die Transportaufnahme in der Beladestation;
- Ankoppeln der Transportaufnahme mit dem Werkstück am Ringförderer;
- Fördern der Transportaufnahme mit dem Werkstück von der Beladestation zur Abgabestation;
- Abheben der Transportaufnahme mit dem werkstück vom Ringförderer über eine Beschickungsvorrichtung;
- Übergeben der Transportaufnahme mit dem Werkstück an ein Abgrataggregat;
- Trennen des Werkstückes vom Grat und Überführen des Werkstückes in ein Kalibrieraggregat;
- Ausfördern des abgetrennten Grates auf der Transportaufnahme über die Beschickungsvorrichtung aus dem Abgrataggregat in die Abgabestation und Fördern der Transportaufnahme mit Grat über den Ringförderer von der Abgabestation zur Gratentnahmestation;
- Abnehmen des Grates von der Transportaufnahme in der Gratentnahmestation und Rückführen der leeren Transportaufnahme über den Ringförderer zur Beladestation.

Der Erfindung liegt der Gedanke zugrunde, die Automatisierung nicht auf einen einfachen automatischen Transport zwischen dem Umformaggregat, dem Abgrataggregat und dem Kalibrieraggregat zu beschränken, sondern einen vollkommen neuen Arbeitsablauf zu schaffen, der Lagefixierprobleme für die Werkstücke vor jedem Arbeitsgang vermeidet und ohne zusätzlichen Aufwand auch den Abtransport des vom Werkstück abgetrennten Grates mit einbezieht und bewerkstelligt.

So werden erfindungsgemäß die Werkstücke sogleich nach dem Schmiedevorgang im Umformaggregat auf der Transportaufnahme lagefixiert und erst nach erfolgtem Trennen vom Grat von der Transportaufnahme abgenommen. Dies hat zur Folge, daß die durch den Schmiedevorgang erzeugten Werkstücke bis zum Abtrennvorgang des Grates, insbesondere bei der Übergabe auf das Abgrataggregat und beim Plazieren in dem Abgrataggregat nicht mehr lagefixiert werden müssen, was bei den gegebenen Bedingungen (glühender Zustand) und den stark differierenden Umrissen des Grates äußerst schwierig und aufwendig wäre.

Erfindungsgemäß ist jedoch die Aufgabe der Transportaufnahme nach dem Abnehmen des Werkstückes noch nicht abgeschlossen. Vielmehr wird die Transportaufnahme nach dem Abnehmen der Werkstücke für den Abtransport des Grates eingesetzt und übernimmt damit eine Doppelfunktion.

Aufgrund der endlos geführten Förderstrecke wird erfindungsgemäß mit ein und dem selben Förderer zudem nicht nur das im Umformaggregat geschmiedete Werkstück zum Abgrataggregat, sondern beim Rücklauf zur Beladestation auch der abgetrennte Grat aus dem Bereich des Abgrataggregates in den Bereich der Gratentnahmestation gefördert. Somit hat aufgrund des erfindungsgemäßen Verfahrensablaufes auch die Förderstrecke eine Doppelfunktion und übernimmt im Rücklaufbereich die wesentliche Aufgabe des Gratabtransportes.

Vorteil der endlos geführten Förderstrecke ist zudem, daß ein getrennter Rücktransport der Transportaufnahmen zur Ladestation nach abgeschlossenem Einsatz entfällt.

Grundsätzlich kann die erfindungsgemäße Verfahrensweise in verschiedenster Art gestaltet werden. Eine besonders vorteilhafte Ausgestaltung ergibt sich jedoch, wenn mit dem erfindungsgemäßen Verfahren insgesamt vier Transportaufnahmen im Umlauf taktweise gefördert werden, wobei im Stillstand jeweils gleichzeitig:
- ein Grat eines ersten Werkstückes in der Gratentnahmestation von der ersten Transportaufnahme abgenommen,
- eine zweite Transportaufnahme mit dem Grat eines zweiten Werkstückes in der Abgabestation von dem Abgrataggregat übernommen, und
- ein viertes Werkstück mit Grat in der Beladestation auf die vierte Transportaufnahme aufgelegt wird,
   wobei beim anschließenden Fördervorgang
- die erste Transportaufnahme leer in die Beladestation,
- die zweite Transportaufnahme mit dem Grat des zweiten Werkstückes in die Gratentnahmestation, und
- die vierte Transportaufnahme mit dem vierten Werkstück in die Abgabestation gefördert werden.

Eine derartige Verfahrensweise kann mit einer relativ einfach aufgebauten Vorrichtung, die auch bei extremen Verhältnissen betriebssicher läuft, realisiert werden.

Ein besonders zweckmäßiger Verfahrensablauf ergibt sich, wenn beim Überführen des jeweils entgrateten Werkstückes von dem Abgrataggregat in das Kalibrieraggregat das entgratete Werkstück in einem ersten Schritt in eine Wartestation überführt und dann in einem zweiten Schritt von der Wartestation in das Kalibrieraggregat verschoben wird.

Aufgrund der Überführung in zwei Schritten läßt sich der Verfahrensablauf des gesamten Verfahrens optimal gestalten und insbesondere der Übergabevorgang zum Abgrataggregat in vorteilhafter Weise abwickeln.

Beim Überführen des jeweils entgrateten Werkstückes von dem Abgrataggregat in das Kalibrieraggregat in zwei Schritten, ist es vorteilhaft, daß in der Phase des ersten Schrittes beim Überführen des entgrateten dritten Werkstückes von dem Abgrataggregat in die Wartestation die zweite Transportaufnahme mit dem Grat des zweiten Werkstückes aus der Abgabestation in die Gratentnahmestation und das vierte Werkstück mit Grat auf der vierten Transportaufnahme von der Beladestation in die Abgabestation gefördert werden.

Ferner ist es bei einer derartigen Verfahrensweise vorteilhaft, wenn in der Phase des zweiten Schrittes beim Überführen des entgrateten dritten Werkstückes von der Wartestation in das Kalibrieraggregat das vierte Werkstück mit dem Grat mit der vierten Transportaufnahme aus der Abgabestation in das Abgrataggregat und die dritte Transportaufnahme mit dem Grat des dritten Werkstückes aus dem Abgrataggregat in die Abgabestation gefördert werden.

Für die Entnahme des Grates in der Gratentnahmestation können grundsätzlich die verschiedensten Arbeitsweisen gewählt werden. Vorteilhaft ist es jedoch, wenn der Grat in der Gratentnahmestation unterfangen und im Anschluß daran von der Transportaufnahme abgehoben wird. Ein besonders einfacher Abtransport ist dann gewährleistet, wenn der Grat beim Abheben geneigt und unter Ausnutzung er Schwerkraft über eine Rutsche in einen Sammelbehälter gefördert wird.

Aufgabe der vorliegenden Erfindung ist es ferner, eine technisch einfach aufgebaute Vorrichtung zur Durchführung des Verfahrens zu schaffen, die trotz des rauhen Betriebes betriebssicher arbeitet.

Diese Aufgabe wird erfindungsgemäß mit einer Vorrichtung gelöst, die ausgestattet ist mit:
- einem die endlose Förderstrecke bildenden Ringförderer für mindestens eine Transportaufnahme, wobei der Ringförderer zum taktweisen Fördern von jeweils drei in gleichen Abständen zueinander angeordneten Transporaufnahmen eingerichtet ist,
- Einrichtungen, die die Transportaufnahme bzw. die Transportaufnahmen von einer Belade- zu einer Abgabestation und von dort zu einer Gratentnahmestation und zurück zur Beladestation taktweise fortbewegen,
- einer Beschickungsvorrichtung in der Abgabestation, über die jeweils die aus der Beladestation ankommende Transportaufnahme mit einem in einem Umformaggregat geschmiedeten mit Grat versehenen Werkstück in ein Abgrataggregat eingefördert, sowie die Transportaufnahme mit Grat aus dem Abgrataggregat ausgefördert wird,
- einem Kalibrieraggregat, in das das jeweils entgratete Werkstück aus dem Abgrataggregat überführt wird,
- sowie einer Greifeinrichtung, mit der der Grat in der Gratentnahmestation von der Transportaufnahme abhebbar und einem Sammelbehälter zuführbar ist.

Der Ringförderer ist erfindungsgemäß zum taktweisen Fördern von drei in gleichen Abständen zueinander angeordneten Transportaufnahmen eingerichtet. Bei einer derartigen Konstellation der Vorrichtung müssen in Bezug auf die Förderstrecke auch die Beladestation, die Abgabestation und die Gratentnahmestation in gleichen Abständen zueinander angeordnet sein.

Für den in Schmieden rauhen Betrieb eignen sich insbesondere Ring-Förderer in Form von Kettenbahn-Förderern.

Im Rahmen der Erfindung kann die Beschickungsvorrichtung in verschiedenster Weise gestaltet sein. Eine besonders vorteilhafte Ausgestaltung ergibt sich jedoch, wenn die Beschickungsvorrichtung zwei um eine vertikale Achse verschwenkbare, diametral einander gegenüberliegende und radial verlaufende Arme aufweist, deren freie Enden zum Erfassen der Transportaufnahmen eingerichtet sind. Derartige Beschickungsvorrichtungen, auch Doppelarmgreifer genannt, sind technisch einfach aufgebaut und eignen sich besonders für den rauhen Betrieb im Schmiedebereich.

Dem jeweiligen Anwendungszweck und der Art der Werkstücke entsprechend kann anstelle eines Doppelarmgreifers auch eine sogenannte Drehkreuzanordnung eingesetzt werden, die aus anderen Gebieten der Technik grundsätzlich bekannt ist.

Grundsätzlich kann die Beschickungsvorrichtung in jeder beliebigen Weise angetrieben werden. Vorteilhaft ist es jedoch, wenn die Arme über eine Kolben-Zylinder-Anordnung verschwenkbar sind. Auf diese Weise ist zwar keine Drehbewegung um 360° möglich. Für den Beschickungsvorgang reicht jedoch in der Regel eine Schwenkbewegung um 180° aus, die beim Einsatz einer Kolben-Zylinder-Anordnung als Hin- und Herbewegung, d.h. als Schwenkbewegung zuerst in einer und dann in entgegengesetzter Richtung ausgestaltet sein kann. Ein Antrieb der Arme über eine Kolben-Zylinder-Anordnung ist technisch mit einfachen Mitteln realisierbar, kostengünstig herzustellen und gut gegen rauhe Einflüsse im Betrieb zu schützen.

Das Abgrataggregat und das Kalibrieraggregat können ebenfalls erfindungsgemäß in verschiedenster Weise gestaltet werden. Vorteilhaft ist es jedoch, wenn beide Aggregate mit einem gemeinsamen Antrieb ausgestattet sind. Zweckmäßig ist es dabei, das Abgrataggregat und das Kalibrieraggregat in einer Doppelpresse mit im Abstand zueinander angeordneter Abgrat- und Kalibrierstation zusammenzufassen. Bei einer derartigen Doppelpresse ist es möglich, die Wartestation zwischen der Abgratstation und der Kalibrierstation anzuordnen und damit den Aufbau weiter zu vereinfachen.

Zum Überführen der Werkstücke vom Abgrataggregat in die Wartestation bzw. von der Wartestation in das Kalibrieraggregat kann grundsätzlich jede beliebige Transport- oder Verschiebevorrichtung eingesetzt werden, da es nach dem Entfernen des Grates in aller Regel einfacher ist, das Werkstück zu fassen.

Die Transportaufnahme wird grundsätzlich nach dem Schmiedewerkstück gestaltet. Sie kann jede geeignete Form aufweisen. Vorteilhaft ist es, die Transportaufnahme als Platte auszubilden und damit ihre Handhabung zu erleichtern.

Gemäß einer besonders bevorzugten Ausgestaltung der Erfindung ist jedoch die Transportaufnahme als Abstreiferplatte für den Grat ausgebildet. In einem solchen Fall ist die Abstreiferplatte beim Abgratvorgang in dem Abgrataggregat ein Teil eines Abgratwerkzeuges und hat damit erfindungsgemäß eine Mehrfachfunktion.

Im folgenden ist zum besseren Verständnis der Erfindung die Verfahrensweise und die Vorrichtung zur Durchführung des Verfahrens unter Bezugnahme auf die beigefügten Zeichnungen näher beschrieben und erläutert:

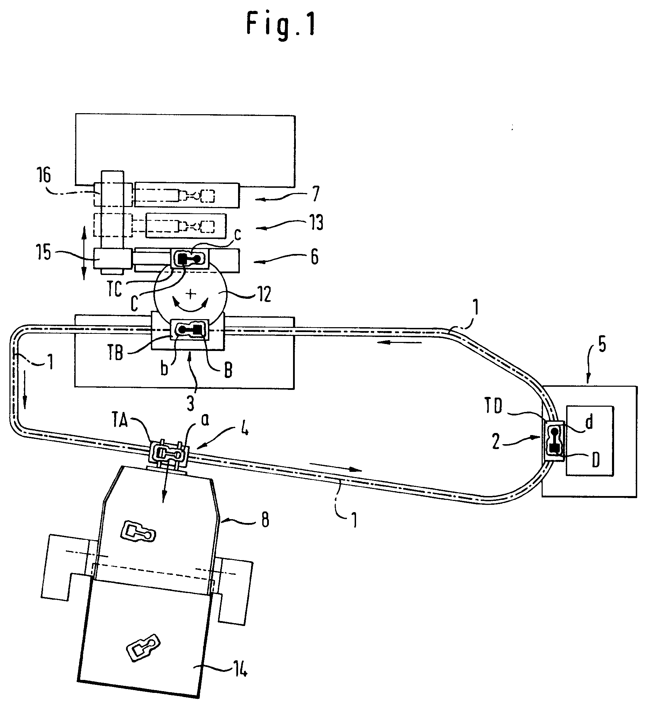

- Fig. 1: zeigt in einer Draufsicht schematisch eine Gesamtansicht der Vorrichtung zur Durchführung des Verfahrens, die eine endlose Förderstrecke in Form eines Ringförderers 1, sowie in gleichen Abständen zueinander am Ringförderer 1 angeordnete Stationen aufweist, nämlich eine Beladestation 2, eine Abgabestation 3 und eine Gratentnahmestation 4 mit den jeweils in diesen Stationen angeordneten Aggregaten, nämlich einem Umformaggregat im Bereich der Beladestation 2, einem Abgrataggregat 6 mit Kalibrieraggregat 7 im Bereich der Abgabestation 3, sowie einer Greifvorrichtung 8 im Bereich der Gratentnahmestation 4.
- Fig. 2.1 bis 2.9 zeigen: in neun Arbeitsphasen schematisch den Arbeitsablauf im Bereich der Abgabestation 3 in dem Abgrataggregat 6 und dem Kalibrieraggregat 7, und
- Fig. 3.1 bis 3.4 zeigen: in vier Arbeitsphasen schematisch den Arbeitsablauf im Bereich der Gratentnahmestation 4 an der Greifvorrichtung 8.

Der in Fig. 1 dargestellte Ringförderer 1, der beispielsweise als Kettenbahn-Förderer ausgebildet sein kann, dient im vorliegenden Ausführungsbeispiel zum taktweisen Fördern von insgesamt vier Transportaufnahmen TA, TB, TC und TD, wobei jeweils drei Transportaufnahmen (in der Phase gemäß Fig. 1 die Transportaufnahme TA, TB und TD) in gleichen Abständen zueinander gefördert werden und sich die vierte Transportaufnahme (in der Phase gemäß Fig. 1, die Transportaufnahme TC) zur Durchführung des Abgratvorganges im Abgrataggregat 6 befindet.

Die Transportaufnahmen TA bis TC sind vorzugsweise plattenförmig ausgebildet und besitzen auf ihrer Unterseite und/oder im Bereich ihrer Schmalseiten im einzelnen nicht dargestellte Kopplungsmittel, mit denen sie am Ringförderer 1 angekoppelt bzw. in den einzelnen Stationen fixiert oder auch im Bereich des Abgrataggregates 6 (wie später noch beschrieben werden wird) vom Ringförderer 1 abgenommen werden können.

Auf ihrer Oberseite sind die Transportaufnahmen TA bis TD jeweils mit nicht näher beschriebenen und dargestellten Fixiermitteln ausgestattet, mit denen Werkstücke A bis D bei den im folgenden noch beschriebenen Transport- und Arbeitsvorgängen gegen Verrutschen in horizontaler Ebene auf den Transportaufnahmen gehalten sind. Diese Fixiermittel bestehen üblicherweise aus Ausnehmungen oder Vorsprüngen auf der Oberseite der Transportaufnahmen.

Der grundsätzliche Verfahrensablauf bei einer Vorrichtung, wie sie aus Fig. 1 schematisch hervorgeht, ist wie folgt zu beschreiben. Da sich bei laufendem Betrieb der Vorrichtung die vier Transportaufnahmen mit den jeweiligen Werkstücken und Graten jeweils verteilt in den verschiedenen Stationen bzw. Aggregaten befinden, werden bei der folgenden Beschreibung des Durchlaufes eines einzigen Werkstückes der Einfachheit halber jeweils die Bezugszeichen der anderen Transportaufnahmen, Werkstücke und Grate in den verschiedenen Stationen bzw. Aggregaten verwendet und zur Kennzeichnung in Klammern gesetzt:

Ein im Umformaggregat 5, wie beispielsweise einem Gesenkschmiedehammer hergestelltes Werkstück D, wie beispielsweise ein Pleuel, welches herstellungsbedingt auf seiner Außenseite einen Grat d aufweist, wird von einer Bedienungsperson manuell oder auch über eine Vorrichtung automatisch in der Beladestation 2 auf die Transportaufnahme TD aufgelegt.

Mittels eines Fußschalters (im Falle des manuellen Auflegens durch eine Bedienungsperson) oder eines Beladesensors (im Falle einer automatischen Arbeitsweise) wird der Ringförderer 1 in Betrieb gesetzt und das Werkstück mit Grat noch im glühenden Zustand in die Abgabestation 3 gefördert. In der Abgabestation 3 wird das Werkstück (B) mit Grat (b) zusammen mit seiner Transportaufnahme (TB) über eine Beschickungsvorrichtung 12 vom Ringförderer 1 abgehoben und in das Abgrataggregat 6 übernommen. In dem Abgrataggregat 6 wird der Grat (c)vom Werkstück (c) getrennt und das Werkstück ohne Grat in eine Wartestation 13 bewegt. Von der Wartestation 13 wird das Werkstück in das Kalibrieraggregat 7 gefördert, in diesem kalibriert, d.h. nachgerichtet und von dort aus unmittelbar einer weiteren Wärmebehandlung zugeführt, auf die hier nicht weiter eingegangen wird.

Der im Abgrataggregat 6 auf der Transportaufnahme liegende Grat wird über die Beschickungsvorrichtung 12 in die Abgabestation 3 zurückgefördert und gelangt von dort aus mit dem nächsten Takt über den Ringförderer zu Gratentnahmestation 4.

In der Gratentnahmestation 4 wird der auf der Transportaufnahme (TA) angelieferte Grat (a) über die Greifvorrichtung 8 entnommen und einem Sammelbehälter 14 zugeführt.

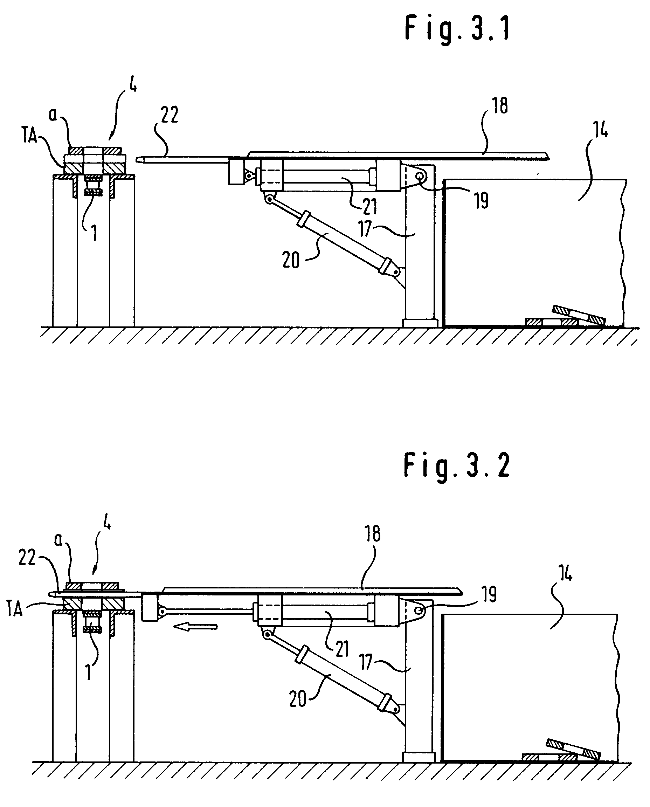

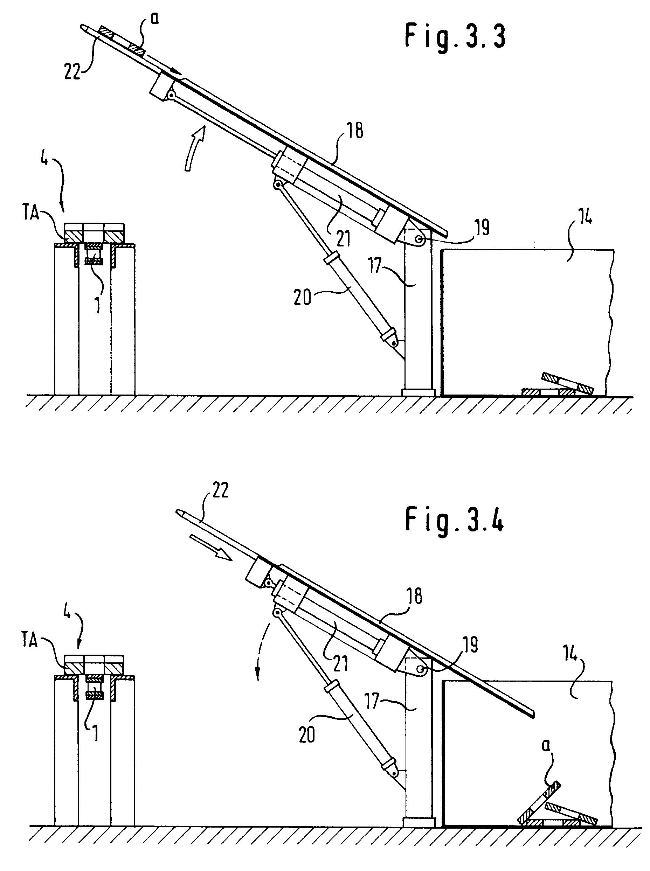

Die Arbeitsweise der Greifvorrichtung 8 in der Gratentnahmestation 4 wird später noch anhand der Fig. 3.1 bis 3.4 im Detail erläutert.

In der letzten Phase gelangt dann die leere Transportaufnahme (TA) aus der Gratentnahmestation 4 zurück in die Beladestation 2, in der sie dann mit einem im Umformaggregat 5 herstellten neuen Werkstück mit Grat bestückt wird, so daß der oben beschriebene Arbeitszyklus erneut beginnen kann.

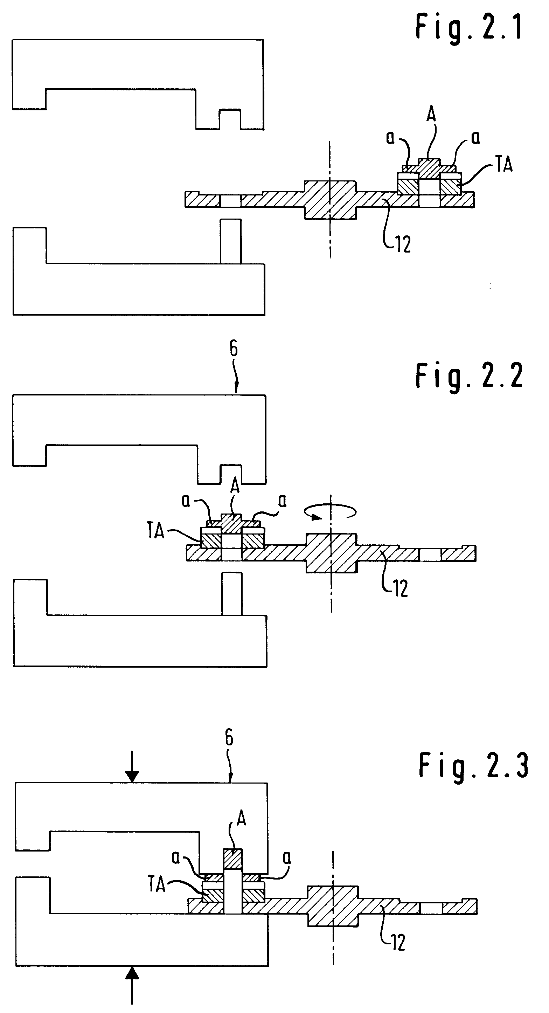

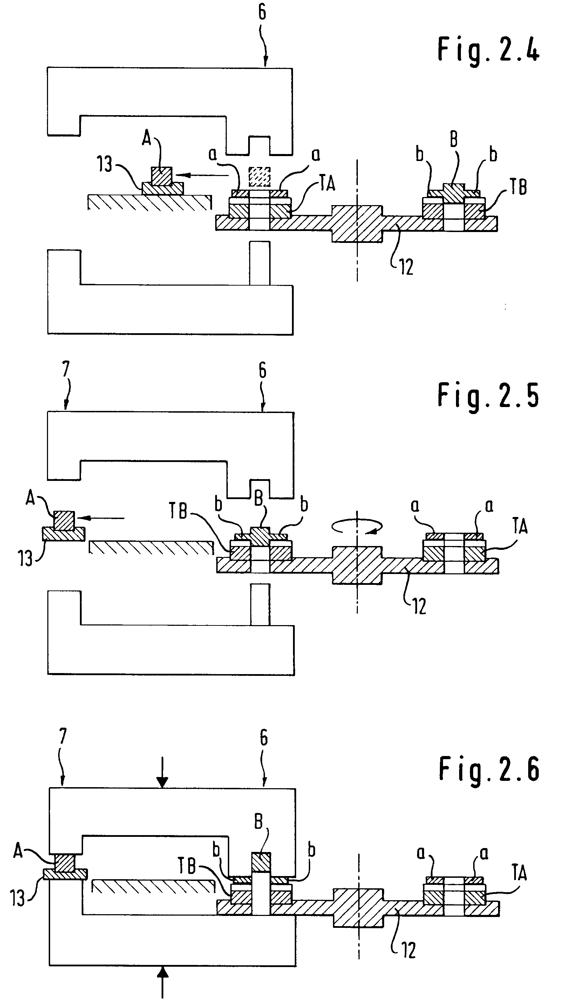

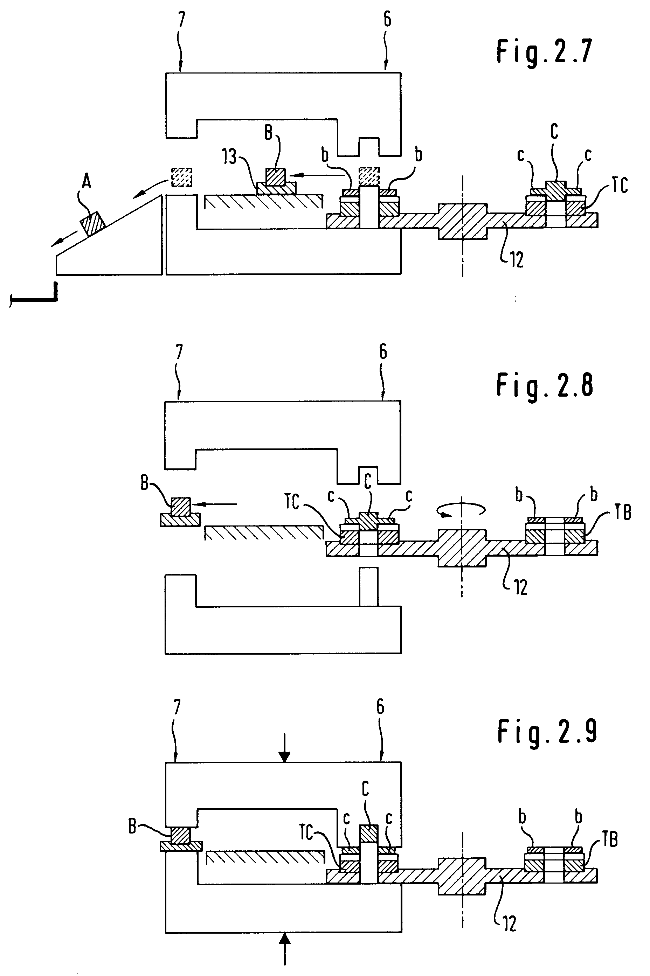

Die Arbeitszyklen des im Bereich der Abgabestation 3 angeordneten Abgrataggregat 6 und Kalibrieraggregat 7 sowie der in der Gratentnahmestation 4 angeordneten Greifvorrichtung 8 sind präzise mit dem Arbeitszyklus des Ringförderers 1 abgestimmt und zwangsgekoppelt. Die einzelnen Abläufe ergeben sich im Zusammenhang mit der folgenden Beschreibung zu den Fig. 2.1 bis 2.9 bzw. 3.1 bis 3.4.

Der Arbeitsablauf im Bereich der Abgabestation 3, d.h. die Arbeitsweise der Beschickungsvorrichtung 12, im Zusammenwirken mit dem Abgrataggregat 6 und dem Kalibrieraggregat 7 wird nun anhand der neun Arbeitsphasen unter Bezugnahme auf die Fig. 2.1 und 2.9 beschrieben. Zum besseren Verständnis der Abläufe wird dabei der Durchlauf eines Werkstückes A mit Grat a und der darauf folgenden Werkstücke B mit Grat b und C mit Grat c ohne Bezugnahme auf dem Werkstück A vorhergehende Werkstücke beschrieben.

In der ersten Phase (Fig. 2.1) wird das durch den Ringförderer 1 in die Abgabestation 3 geförderte Werkstück A mit Grat a von der Beschickungsvorrichtung 12, die der Einfachheit halber in Form eines Drehtellers dargestellt ist, auf der zugehörigen Transportaufnahme TA übernommen.

In der zweiten Phase (Fig. 2.2) wird dann das mit dem Grat a versehene Werkstück A über die Beschickungsvorrichtung 12 auf der Transportaufnahme TA in das Abgrataggregat 6 geschwenkt.

In der dritten Phase (Fig. 2.3) wird der Grat a vom Werkstück A abgetrennt.

Nach dem Abgratvorgang wird das entgratete Werkstück A in der vierten Phase (Fig. 2.4) über eine erste Transportvorrichtung 15 (nur in Fig. 1 angedeutet) aus dem Abgrataggregat 6 entnommen und in die Wartestation 13 überführt. Der Grat a verbleibt auf der Transportaufnahme TA.

Im Verlaufe des Arbeitszyklus der ersten Transportvorrichtung 15, d.h. während der Überführung des Werkstückes A aus dem Abgrataggregat 6 in die Wartestation 13 wird über den Ringförderer 1 aus der Beladestation 2 das nachfolgende Werkstück B mit Grat b auf der Transportaufnahme TB angeliefert und in der Abgabestation 3 von der Beschickungsvorrichtung 12 übernommen.

In der fünften Phase (Fig. 2.5) wird das entgratete Werkstück A mittels einer zweiten Transportvorrichtung 16 (lediglich in Fig. 1 angedeutet) aus der Wartestation 13 in das Kalibrieraggregat 7 überführt.

Gleichzeitig mit der Überführung wird über die Beschickungsvorrichtung 12 in dieser fünften Phase der Grat a auf der Transportaufnahme TA aus dem Abgrataggregat 6 heraus in die Abgabestation 3 und das nachfolgende Werkstück B mit Grat b auf der Transportaufnahme TB in das Abgrataggregat 6 überführt.

Wie aus den Fig. 2.1 bis 2.9 hervorgeht, bildet das Abgrataggregat 6 mit dem Kalibrieraggregat 7 im vorliegenden Ausführungsbeispiel eine Einheit. Dies bedeutet, daß die Arbeitsbewegungen des Abgrataggregates 6 und des Kalibrieraggregates 7 jeweils gemeinsam ablaufen, d.h. der Abgratvorgang und der Kalibriervorgang zeitlich gesehen gleichzeitig erfolgen.

In der sechsten Phase (Fig. 2.6) wird das Werkstück A im Kalibrieraggregat 7 kalibriert und das Werkstück B im Abgrataggregat 6 vom Grat b getrennt.

In der siebten Phase (Fig. 2.7) wird das fertigkalibrierte Werkstück A aus dem Kalibrieraggregat 7 herausgefördert und unmittelbar einer anschließenden Wärmebehandlung zugeführt. Gleichzeitig wird das vom Grat b getrennte Werkstück B durch die erste Transportvorrichtung 15 von dem Abgrataggregat 6 in die Wartestation 13 überführt.

Im Verlaufe dieser Überführungsphase wird die Transportaufnahme TA mit dem Grat a in der Abgabestation 3 von der Beschickungsvorrichtung 12 entnommen und über den Ringförderer 1 zur Gratentnahmestation 4 gefördert. Gleichzeitig mit diesem Abtransport der Transportaufnahme TA wird über den Ringförderer 1 die Transportaufnahme TC mit dem Werkstück C und dem Grat c in die Abgabestation 3 gefördert und von der Beschickungsvorrichtung 12 übernommen.

In der achten Phase (Fig. 2.8) wird das entgratete Werkstück B aus der Wartestation 13 in das Kalibrieraggregat 7 überführt. Gleichzeitig mit dieser Überführung wird über die Beschickungsvorrichtung 12 der Grat b auf der Transportaufnahme TB aus dem Bereich des Abgrataggregates 6 herausgefördert und das neue Werkstück C mit Grat c auf der Transportaufnahme TC in den Bereich des Abgrataggregates 6 hineingefördert.

In der neunten Phase (Fig. 2.9) wird im Abgrataggregat 6 vom Werkstück C der Grat c abgetrennt und in dem Kalibrieraggregat 7 das Werkstück B kalibriert.

Im Anschluß daran wird das fertig kalibrierte Werkstück B aus dem Kalibrieraggregat 7 zur Wärmebehandlung analog der oben beschriebenen siebten Phase (Fig. 2.7) entnommen, das vom Grat c gelöste Werkstück C in die Wartestation 13 übergeben und der oben beschriebene Zyklus mit neuen Werkstücken Phase für Phase wiederholt.

Wie aus den Fig. 3.1 bis 3.4 hervorgeht, besteht die Greifvorrichtung 8 in der Gratentnahmestation 4 aus einem Ständer 17, an dem eine Kipp-Platte 18 über ein Gelenk 19 angelenkt ist. Die Kipp-Platte 18 kann, wie aus den Fig. 3.1 bis 3.4 hervorgeht, über einen Kippzylinder 20 aus ihrer horizontalen Lage in eine geneigte Lage angehoben werden.

Die Kipp-Platte 18 ist in einer nicht näher dargestellten Führung in ihrer Plattenebene verschiebbar gelagert. Unter der Kipp-Platte ist parallel zur Plattenebene ein Verschiebezylinder 21 angeordnet, mit dem die Kipp-Platte 18 in ihrer Führung in der Plattenebene verschiebbar ist. Die Anordnung ist dabei derart getroffen, daß die Kipp-Platte 18 zwischen der Gratentnahmestation 4 des Ringförderers 1 und dem Sammelbehälter 14 hin- und herverschiebbar ist.

Auf der dem Ringförderer 1 zugewandten Seite ist die Kipp-Platte 18 mit einer Aushubgabel 22 ausgestattet, die zum Unterfangen des jeweils auf seiner Transportaufnahme (beispielsweise TA) angelieferten Grates (beispielsweise a) eingerichtet ist. Hierzu ist jede der Transportaufnahmen mit Ausnehmungen 23 versehen, in die die Aushubgabel 22 eingeschoben werden kann.

In der ersten Phase (Fig. 3.1) wird durch den Ringförderer 1 beispielsweise die Transportaufnahme TA mit dem Grat a in die Gratentnahmestation 4 eingefördert. In dieser ersten Phase befindet sich die Kipp-Platte 18 zusammen mit der Aushubgabel 22 in ihrer zurückgezogenen Stellung.

In der zweiten Phase (Fig. 3.2) wird nun der Verschiebezylinder 21 aktiviert und die Aushubgabel 22 in die Ausnehmung 23 beispielsweise der Transportaufnahme TA eingeschoben. Auf diese Weise wird der Grat a unterfangen.

In der dritten Phase (Fig. 3.3) wird der Kippzylinder 20 aktiviert und die Kipp-Platte 18 angehoben. Durch die Neigung gleitet der unterfangene und angehobene Grat a über die Aushubgabel 22 auf die Kipp-Platte 18 und von dort in den Sammelbehälter 14. Während dieser Gleitbewegung wird der Verschiebezylinder 21 wieder eingefahren (Fig. 3.4) und damit die Kipp-Platte 18 zusammen mit der Aushubgabel 22 in die zurückgezogene Stellung überführt. Im Anschluß daran wird der Kippzylinder 22 betätigt und die Kipp-Platte 18 zusammen mit der Aushubgabel 22 in die Ausgangsstellung (vgl. Fig. 3.1) zurückgeführt. Die Greifvorrichtung 8 ist dann für einen erneuten Entnahmevorgang bereit und die vom Grat entleerte Transportaufnahme kann im darauffolgenden Zyklus von dem Ringförderer 1 in die Beladestation 2 zur Aufnahme eines neuen im Umformaggregat 5 erzeugten Werkstückes mit Grat transportiert werden.

## Patentansprüche

1. Verfahren zum Entgraten und Kalibrieren von in einem Umformaggregat geschmiedeten Werkstücken, gekennzeichnet durch folgende Schritte:
- Fördern mindestens einer Transportaufnahme (TA, TB, TC oder TD) im Umlauf über einen eine endlose Förderstrecke bildenden Ringförderer (1) von einer Beladestation (2) zu einer Abgabestation (3), von dieser zu einer Gratentnahmestation (4) und von dort zurück zur Beladestation (2);
- Auflegen jeweils mindestens eines, im Umformaggregat geschmiedeten, mit Grat (a, b, c oder d) versehenen Werkstückes (A, B, C oder D) auf die Transportaufnahme (TA bis TD) in der Beladestation (2);
- Ankoppeln der Transportaufnahme (TA bis TD) mit dem Werkstück (A bis D) am Ringförderer (1);
- Fördern der Transportaufnahme (TA bis TD) mit dem Werkstück (A bis D) von der Beladestation (2) zur Abgabestation (3);
- Abheben der Transportaufnahme (TA bis TD) mit dem Werkstück (A bis D) vom Ringförderer (1) über eine Beschickungsvorrichtung (12);
- Übergeben der Transportaufnahme (TA bis TD) mit dem Werkstück (A bis D) über die Beschickungsvorrichtung (12) an ein Abgrataggregat (6);
- Trennen des Werkstückes (A bis D) vom Grat (a bis d) und Überführen des Werkstückes (A bis D) in ein Kalibrieraggregat (7);
- Ausfördern des abgetrennten Grates (a bis d) auf der Transportaufnahme (TA bis TD) über die Beschickungsvorrichtung (12) aus dem Abgrataggregat (6) in die Abgabestation (3) und Fördern der Transportaufnahme (TA bis TD) mit Grat (a bis d) über den Ringförderer (1) von der Abgabestation (3) zur Gratentnahmestation (4);
- Abnehmen des Grates (a bis d) von der Transportaufnahme (TA bis TD) in der Gratentnahmestation (4) und Rückführen der leeren Transportaufnahme über den Ringförderer (1) zur Beladestation (2).

2. Verfahren nach Anspruch 1, gekennzeichnet durch taktweises Fördern von vier Transportaufnahmen (TA, TB, TC und TD) im Umlauf über den Ringförderer (1),
wobei im Stillstand jeweils gleichzeitig
- ein Grat (a) eines ersten Werkstückes (A) in der Gratentnahmestation (4) von der ersten Transportaufnahme (TA) abgenommen,
- eine zweite Transportaufnahme (TB) mit dem Grat (b) eines zweiten Werkstückes (B) in der Abgabestation (3) von dem Abgrataggregat (6) übernommen, und
- ein viertes Werkstück (D) mit Grat (d) in der Beladestation (2) auf die vierte Transportaufnahme (TD) aufgelegt wird,
wobei beim anschließenden Fördervorgang
- die erste Transportaufnahme (TA) leer in die Beladestation (2),
- die zweite Transportaufnahme (TB) mit dem Grat (b) des zweiten Werkstückes in die Gratentnahmestation (4), und
- die vierte Transportaufnahme (TD) mit dem vierten Werkstück (D) in die Abgabestation (3) gefördert werden.

3. Verfahren nach Anspruch 1 oder 2,
**dadurch gekennzeichnet, daß**
beim Überführen des jeweils entgrateten Werkstückes von dem Abgrataggregat (6) in das Kalibrieraggregat (7) das entgratete Werkstück in einem ersten Schritt in eine Wartestation (13) überführt und dann in einem zweiten Schritt von der Wartestation (13) in das Kalibrieraggregat (7) verschoben wird.

4. Verfahren nach Anspruch 2 und 3,
**dadurch gekennzeichnet, daß**
in der Phase des ersten Schrittes beim Überführen des entgrateten dritten Werkstückes von dem Abgrataggregat (6) in die Wartestation (13) die zweite Transportaufnahme mit dem Grat des zweiten Werkstückes aus der Abgabestation (3) in die Gratentnahmestation (4) und das vierte Werkstück mit Grat auf der vierten Transportaufnahme von der Beladestation (2) in die Abgabestation (3) gefördert werden.

5. Verfahren nach Anspruch 2, 3 und 4,
**dadurch gekennzeichnet, daß**
in der Phase des zweiten Schrittes beim Überführen des entgrateten dritten Werkstückes von der Wartestation (13) in das Kalibrieraggregat (7) das vierte Werkstück mit dem Grat mit der vierten Transportaufnahme aus der Abgabestation (3) in das Abgrataggregat (6) und die dritte Transportaufnahme mit dem Grat des dritten Werkstückes aus dem Abgrataggregat (6) in die Abgabestation (3) gefördert werden.

6. Verfahren nach Anspruch 1 oder 2,
**dadurch gekennzeichnet, daß**
der Grat (a) in der Gratentnahmestation (4) unterfangen und im Anschluß daran von der Transportaufnahme (TA) abgehoben wird.

7. Verfahren nach Anspruch 6,
**dadurch gekennzeichnet, daß**
der Grat beim Abheben geneigt und unter Ausnutzung der Schwerkraft über eine Rutsche in einen Sammelbehälter (14) gefördert wird.

8. Vorrichtung zur Durchführung des Verfahrens nach Anspruch 1 oder 2, mit
- einem die endlose Förderstrecke bildenden Ringförderer (1) für mindestens eine Transportaufnahme (TA, TB, TC oder TD), wobei der Ringförderer (1) zum taktweisen Fördern von jeweils drei in gleichen Abständen zueinander angeordneten Transportaufnahmen (TA, TB, TD) eingerichtet ist,
- Einrichtungen, die die Transportaufnahme bzw. die Transportaufnahmen von einer Beladestation (2) zu einer Abgabestation (3) und von dort zu einer Gratentnahmestation (4) und zurück zur Beladestation (2) taktweise fortbewegen,
- einer Beschickungsvorrichtung (12) in der Abgabestation (3), über die jeweils die aus der Beladestation (2) ankommende Transportaufnahme (TA bis TD) mit einem in einem Umformaggregat (5) geschmiedeten, mit Grat (a, b, c oder d) versehenen Werkstück (A, B, C oder D) in ein Abgrataggregat (6) eingefördert, sowie die Transportaufnahme mit Grat aus dem Abgrataggregat (6) ausgefördert wird,
- einem Kalibrieraggregat (7), in das das jeweils entgratete Werkstück (A bis D) aus dem Abgrataggregat (6) überführt wird,
- sowie einer Greifeinrichtung (8), mit der der Grat (a bis d) in der Gratentnahmestation (4) von der Transportaufnahme (TA bis TD) abhebbar und einem Sammelbehälter (14) zuführbar ist.

9. Vorrichtung nach Anspruch 8, **dadurch**
**gekennzeichnet, daß** die Greifeinrichtung
(8) aus einem Ständer (17), an dem eine Kipp-Platte (18) über ein Gelenk (19) angelenkt ist, besteht.

10. Vorrichtung nach Anspruch 8,
**dadurch gekennzeichnet, daß**
der Ringförderer (1) als Kettenbahn-Förderer ausgebildet ist.

11. Vorrichtung nach Anspruch 8,
**dadurch gekennzeichnet, daß**
die Beschickungsvorrichtung (12) zwei um eine vertikale Achse verschwenkbare, diametral einander gegenüberliegende und radial verlaufende Arme aufweist, deren freie Enden zum Erfassen der Transportaufnahmen (TA bis TD) eingerichtet sind.

12. Vorrichtung nach Anspruch 8,
**dadurch gekennzeichnet, daß**
die Beschickungsvorrichtung (12) als Drehkreuzanordnung ausgebildet ist.

13. Vorrichtung nach Anspruch 11,
**dadurch gekennzeichnet, daß**
die Arme über eine Kolben-Zylinder-Anordnung verschwenkbar sind.

14. Vorrichtung nach Anspruch 8,
**dadurch gekennzeichnet, daß**
das Abgrataggregat (6) und das Kalibrieraggregat (7) einen gemeinsamen Antrieb aufweisen.

15. Vorrichtung nach Anspruch 14,
**dadurch gekennzeichnet, daß**
das Abgrataggregat (6) und das Kalibrieraggregat (7) in einer Doppelpresse mit im Abstand zueinander angeordneten Abgrat- und Kalibrierstationen zusammengefaßt sind.

16. Vorrichtung nach Anspruch 15,
**dadurch gekennzeichnet, daß**
eine Wartestation (13) zwischen der Abgratstation und der Kalibrierstation angeordnet ist.

17. Vorrichtung nach einem oder mehreren der vorhergehenden Ansprüche 8 bis 16,
**dadurch gekennzeichnet, daß**
zum Überführen der Werkstücke von dem Abgrataggregat (6) in die Wartestation (13) eine erste (15) und zum Verschieben der Werkstücke von der Wartestation (13) in das Kalibrieraggregat (7) eine zweite Transportvorrichtung (16) vorgesehen sind.

18. Vorrichtung nach einem oder mehreren der vorhergehenden Ansprüche 8 bis 17,
**dadurch gekennzeichnet, daß**
jede Transportaufnahme (TA bis TC) als Platte ausgebildet ist.

19. Vorrichtung nach Anspruch 18,
**dadurch gekennzeichnet, daß**
jede Platte als Abstreiferplatte für den Grat ausgebildet ist, die beim Abgratvorgang in dem Abgrataggregat (6) einen Teil eines Abgratwerkzeuges bildet.

## Claims

1. Method for deburring and calibrating work pieces which have been forged in a reshaping assembly, characterised by the following steps:
- conveying at least one transport receptacle (TA, TB, TC or TD) in circulation by a ring conveyor (1) forming an endless conveyor zone from a loading station (2) to a discharge station (3), from the latter to a burr removing station (4) and from there back to the loading station (2);
- placing in each case at least one work piece (A, B, C or D) which has been forged in the reshaping assembly and provided with a burr (a, b, c, or d), on the transport receptacle (TA to TD) in the loading station (2);
- coupling the transport receptacle (TA to TD) to the work piece (A to D) on the ring conveyor (1);
- conveying the transport receptacle (TA to TD) with the work piece (A to D) from the loading station (2) to the discharge station (3);
- lifting the transport receptacle (TA to TD) with the work piece (A to D) off the ring conveyor (1) by a charging device (12);
- transferring the transport receptacle (TA to TD) with the work piece (A to D) by the charging device (12) to a deburring assembly (6);
- separating the work piece (A to D) from the burr (a to d) and transferring the work piece (A to D) to a calibrating assembly (7);
- conveying the separated burr (a to d) on the transport receptacle (TA to TD) by means of the charging device (12) out of the deburring assembly (6) into the discharge station (3), and conveying the transport receptacle (TA to TD) with burr (a to d) by means of the ring conveyor (1) from the discharge station (3) to the burr removing station (4);
- removing the burr (a to d) from the transport receptacle (TA to TD) in the deburring station (4) and returning the empty transport receptacle by means of the ring conveyor (1) to the loading station (2).

2. Method according to claim 1, characterised by cyclic conveying of four transport receptacles (TA, TB, TC and TD) in circulation by means of the ring conveyor (1),
wherein at a standstill in each case at the same time
- a burr (a) of a first work piece (A) in the deburring station (4) is taken off the first transport receptacle (TA),
- a second transport receptacle (TB) with the burr (b) of a second work piece (B) in the discharge station (3) is taken off the deburring assembly (6), and
- a fourth work piece (D) with burr (d) in the loading station (2) is placed on the fourth transport receptacle (TD),
wherein during the subsequent conveying operation
- the first transport receptacle (TA) is conveyed empty into the loading station (2),
- the second transport receptacle (TB) with the burr (b) of the second work piece is conveyed into the deburring station (4), and
- the fourth transport receptacle (TD) with the fourth work piece (D) is conveyed into the discharge station (3).

3. Method according to claim 1 or 2, characterised in that, on transfer of the respectively deburred work piece from the deburring assembly (6) to the calibrating assembly (7), the deburred work piece in a first step is transferred to a waiting station (13) and then in a second step is moved from the waiting station (13) to the calibrating assembly (7).

4. Method according to claims 2 and 3, characterised in that, at the stage of the first step on transfer of the deburred third work piece from the deburring assembly (6) to the waiting station (13), the second transport receptacle with the burr of the second work piece is conveyed out of the discharge station (3) into the deburring station (4) and the fourth work piece with burr on the fourth transport receptacle is conveyed from the loading station (2) into the discharge station (3).

5. Method according to claims 2, 3 and 4, characterised in that, at the stage of the second step on transfer of the deburred third work piece from the waiting station (13) to the calibrating assembly (7), the fourth work piece with the burr is conveyed with the fourth transport receptacle out of the discharge station (3) into the deburring assembly (6), and the third transport receptacle with the burr of the third work piece is conveyed out of the deburring assembly (6) into the discharge station (3).

6. Method according to claim 1 or 2, characterised in that the burr (a) is collected from underneath in the deburring station (4) and then lifted off the transport receptacle (TA).

7. Method according to claim 6, characterised in that the burr is tilted during lift-off and, utilising the force of gravity, conveyed by a chute into a collecting receptacle (14).

8. Apparatus for carrying out the method according to claim 1 or 2, with
- a ring conveyor (1) forming the endless conveying zone for at least one transport receptacle (TA, TB, TC or TD), wherein the ring conveyor (1) is designed for cyclically conveying in each case three transport receptacles (TA, TB, TD) arranged at equal intervals from each other,
- devices which cyclically advance the transport receptacle or receptacles from a loading station (2) to a discharge station (3) and from there to a deburring station (4) and back to the loading station (2),
- a charging device (12) in the discharge station (3), by which in each case the transport receptacle (TA to TD) arriving from the loading station (2) is conveyed with a work piece (A, B, C or D) which has been forged in a reshaping assembly (5) and provided with a burr (a, b, c or d), into a deburring assembly (6), and the transport receptacle with burr is conveyed out of the deburring assembly (6),
- a calibrating assembly (7) to which the respectively deburred work piece (A to D) is transferred from the deburring assembly (6),
- and a gripping device (8) with which the burr (a to d) can be lifted off the transport receptacle (TA to TD) in the deburring station (4) and fed to a collecting receptacle (14).

9. Apparatus according to claim 8, characterised in that the gripping device (8) consists of a stand (17) to which a tilt plate (18) is linked by a joint (19).

10. Apparatus according to claim 8, characterised in that the ring conveyor (1) is constructed as an endless chain conveyor.

11. Apparatus according to claim 8, characterised in that the charging device (12) comprises two diametrically opposed and radially extending arms which are pivotable about a vertical axis and whose free ends are designed to pick up the transport receptacles (TA to TD).

12. Apparatus according to claim 8, characterised in that the charging device (12) is designed as a star wheel assembly.

13. Apparatus according to claim 11, characterised in that the arms are pivotable by a piston and cylinder assembly.

14. Apparatus according to claim 8, characterised in that the deburring assembly (6) and the calibrating assembly (7) have a common drive.

15. Apparatus according to claim 14, characterised in that the deburring assembly (6) and the calibrating assembly (7) are combined in a double press with deburring and calibrating stations arranged at a distance from each other.

16. Apparatus according to claim 15, characterised in that a waiting station (13) is arranged between the deburring station and the calibrating station.

17. Apparatus according to one or more of the preceding claims 8 to 16, characterised in that, for transfer of the work pieces from the deburring assembly (6) to the waiting station (13), a first transport device (15) is provided, and for displacement of the work pieces from the waiting station (13) to the calibrating assembly (7) a second transport device (16) is provided.

18. Apparatus according to one or more of the preceding claims 8 to 17, characterised in that each transport receptacle (TA to TC) is designed as a plate.

19. Apparatus according to claim 18, characterised in that each plate is designed as a stripper plate for the burr, which in the deburring operation in the deburring assembly (6) forms part of a deburring tool.

## Revendications

1. Procédé pour ébavurer et calibrer des pièces façonnées, forgées dans un groupe de déformage, caractérisé par les étapes ci-après :
- transport d'au moins un réceptacle de transport (TA, TB, TC ou TD) en circulation sur un transporteur annulaire (1) constituant un chemin de transport continu, depuis un poste de chargement (2) à un poste d'évacuation (3), de celui-ci à un poste de prélèvement pour ébavurage (4) et, de là, retour au poste de chargement (2);
- pose chaque fois d'au moins une pièce façonnée (A, B, C, ou D) ayant été forgée dans le groupe de déformage, présentant des bavures (a, b, c ou d) sur le réceptacle de transport (TA à TD) dans le poste de chargement (2);
- accouplement du logement de transport (TA à TD) à la pièce façonnée (A à D) sur le transporteur annulaire (1);
- transport du réceptacle de transport (TA à TD) avec la pièce façonnée (A à D) du poste de chargement (2) au poste d'évacuation (3);
- enlèvement du réceptacle de transport (TA à TD) avec la pièce façonnée (A à D) du transporteur annulaire (1), par l'intermédiaire d'un dispositif de garnissage (12);
- transfert du réceptacle de transport (TA à TD) avec la pièce façonnée (A à D) à un groupe d'ébavurage (6) par l'intermédiaire du dispositif de garnissage (12);
- séparation entre la pièce façonnée (A à D) et la bavure (a à d) et transfert de la pièce façonnée (A à D) dans un groupe de calibrage (7);
- transport d'extraction de la bavure (a à d) séparée située sur le réceptacle de transport (TA à TD), par l'intermédiaire du dispositif de garnissage (12), hors du groupe d'ébavurage (6) dans le poste d'évacuation (3) et transport du réceptacle de transport (TA à TD) avec la bavure (a à d), par le transporteur annulaire (1), du poste d'évacuation (3) au poste d'ébavurage (4);
- enlèvement de la bavure (a à d), du réceptacle de transport (TA à TD) dans le poste d'ébavurage (4) et retour du réceptacle vide, par l'intermédiaire du transporteur annulaire (1) au poste de chargement (2).

2. Procédé selon la revendication 1, caractérisé par un transport cadencé de quatre réceptacles de transport (TA, TB, TC et TD), en circulation, sur le transporteur annulaire (1),
où, à l'arrêt, chaque fois simultanément,
- une bavure (a) d'une première pièce façonnée (A) se trouvant dans le poste d'ébavurage (4) est enlevée du premier réceptacle de transport (TA),
- un deuxième réceptacle de transport (TB), comportant la bavure (b) d'une deuxième pièce façonnée (B) est transféré dans le poste d'évacuation (3), depuis le groupe d'ébavurage (6), et
- une quatrième pièce façonnée (D) avec la bavure (d) est posée, dans le poste de chargement (2), sur le quatrième réceptacle de transport (TD),
où, lors du processus de transport subséquent,
- le premier réceptacle de transport (TA) est introduit vide dans le poste de chargement (2),
- le deuxième réceptacle de transport (TB) ayant la bavure (b) de la deuxième pièce façonnée est introduit dans le poste d'ébavurage (4), et
- le quatrième réceptacle de transport (TD) avec la quatrième pièce façonnée (D) est véhiculée dans le poste d'évacuation (3).

3. Procédé selon la revendication 1 ou 2, caractérisé en que lors du transfert chaque fois d'une pièce façonnée ébavurée, à partir du groupe de d'ébavurage (6), dans le groupe de calibrage (7) la pièce façonnée ébavurée est, dans une première étape, transferée dans un poste d'attente (13) et ensuite, dans une deuxième étape, déplacée du poste d'attente (13) à l'intérieur du groupe de calibrage (7).

4. Procédé selon les revendications 2 et 3, caractérisé en ce que, dans la phase de la première étape, lors du transfert de la troisième pièce façonnée ébavurée par le groupe d'ébavurage (6) dans le poste d'attente (13), le deuxième réceptacle de transport avec la bavure de la deuxième pièce façonnée est véhiculé hors du poste d'évacuation (3) dans le poste d'ébavurage (4) et la quatrième pièce façonnée portant la bavure, située sur le quatrième réceptacle de transport, est transportée du poste de chargement (2) dans le poste d'évacuation (3).

5. Procédé selon la revendication 2, 3 et 4, caractérisé en ce que, dans la phase de la deuxième étape, lors du transfert de la troisième pièce façonnée ébavurée depuis le poste d'attente (13) dans le groupe de calibrage (7), la quatrième pièce façonnée portant la bavure est véhiculée, avec le quatrième réceptacle de transport, hors du poste d'évacuation (3) dans le groupe d'ébavurage (6), et le troisième réceptacle de transport, portant la bavure de la troisième pièce façonnée est véhiculé du troisième groupe d'ébavurage (6) au poste d'évacuation (3).

6. Procédé selon la revendication 1 ou 2, caractérisé en ce que la bavure (a) est captée par le dessous dans le poste d'ébavurage (4) et est ensuite levée par le réceptacle de transport (TA).

7. Procédé selon la revendication 6, caractérisé en ce que la bavure lors du soulèvement est inclinée et est véhiculée dans un récipient collecteur (14) en passant par une goulotte ou un plan incliné, en exploitant la force de la pesanteur.

8. Dispositif de mise en oeuvre du procédé selon la revendication 1 ou 2, comportant
- un transporteur annulaire (1) constituant le chemin de transport continu, pour au moins un réceptacle de transport (TA, TB, TC ou TD), le transporteur annulaire (1) étant équipé pour effectuer un transport cadencé chaque fois de trois réceptacles de transport (TA, TB, TD) disposés à égale distance les uns des autres,
- des équipements qui déplacent de façon cadencée le réceptacle de transport ou les réceptacles de transport d'un poste de chargement (2) à un poste d'évacuation (3) et, de là à un poste d'ébavurage (4) et retour au poste de chargement (2),
- un dispositif de garnissage (12), monté dans le poste d'évacuation (3), par l'intermédiaire duquel chaque fois le réceptacle de transport (TA à TD) arrivant du poste de chargement (2) est introduit dans un groupe d'ébavurage (6), avec une pièce façonnée (A, B, C ou D), forgée dans un groupe de déformage (5), dotée d'une bavure (a, b, c ou d) et le réceptacle de transport, avec la bavure, étant sorti du groupe d'ébavurage (6),
- un groupe de calibrage (7), dans lequel la pièce façonnée (A à D) chaque fois ébavurée est transférée hors du groupe d'ébavurage (6),
- ainsi qu'un dispositif de saisie (8) à l'aide duquel la bavure (a à d), se trouvant dans le poste d'ébavurage (4), peut être enlevée du réceptacle de transport (TA à TD) et amenée à un récipient collecteur (14).

9. Dispositif selon la revendication 8, caractérisé en ce que le dispositif de saisie (8) est constitué d'un bâti (17) sur lequel une plaque basculante (18) est articulée par l'intermédiaire d'une articulation (19).

10. Dispositif selon la revendication 8, caractérisé en ce que le transporteur annulaire (1) est réalisé sous la forme d'un transporteur à piste à chaîne.

11. Dispositif selon la revendication 8, caractérisé en ce que le dispositif de garnissage (12) présente deux bras pivotants autour d'un axe vertical, situés de façon diamétralement opposée l'un à l'autre et s'étendant radialement, dont les extrémités libres sont équipées pour saisir les réceptacles de transport (TA à TD).

12. Dispositif selon la revendication 8, caractérisé en ce que le dispositif de garnissage (12) est réalisé sous la forme d'un agencement à croix tournante.

13. Dispositif selon la revendication 11, caractérisé en ce que les bras sont susceptibles d'être pivotés par l'intermédiaire d'un dispositif à pistons et cylindres.

14. Dispositif selon la revendication 8, caractérisé en ce que le groupe d'ébavurage (6) et le groupe de calibrage (7) ont un entraînement commun.

15. Dispositif selon la revendication 14, caractérisé en ce que le groupe d'ébavurage (6) et le groupe de calibrage (7) sont regroupés en une double presse équipée de postes d'ébavurage et de calibrage disposés à distance les uns des autres.

16. Dispositif selon la revendication 15, caractérisé en ce qu'un poste d'attente (13) est disposé entre le poste d'ébavurage et le poste de calibrage.

17. Dispositif selon l'une ou plusieurs des revendications 8 à 16 précédentes, caractérisé en ce qu'un premier groupe de transport (15) est prévu pour transférer les pièces façonnées du groupe d'ébavurage (6) au poste d'attente (13), et un deuxième dispositif de transport (16) est prévu pour déplacer la pièce façonnée du poste d'attente (13) au groupe de calibrage (7).

18. Dispositif selon l'une ou plusieurs des revendications 8 à 17 précédentes, caractérisé en ce que chaque réceptacle de transport (TA à TC) est réalisé sous la forme d'une plaque.

19. Dispositif selon la revendication 18, caractérisé en ce que chaque plaque est réalisée sous la forme d'une plaque de raclage pour la bavure, plaque qui constitue une partie d'un outil d'ébavurage, lors du processus d'ébavurage effectué dans le groupe d'ébavurage (6).
